Europäisches Patentamt

European Patent Office

Office européen des brevets

(19)

(11) **EP 0 692 772 A1**

(12) **DEMANDE DE BREVET EUROPEEN**

(43) Date de publication:
17.01.1996 Bulletin 1996/03

(51) Int. Cl.⁶: $G06T\ 5/00$

(21) Numéro de dépôt: 95201835.6

(22) Date de dépôt: 05.07.1995

(84) Etats contractants désignés:
DE FR GB NL

(30) Priorité: 12.07.1994 FR 9408652

(71) Demandeurs:
• LABORATOIRES D'ELECTRONIQUE PHILIPS
S.A.S.
F-94450 Limeil-Brévannes (FR)
Etats contractants désignés:
FR

• PHILIPS ELECTRONICS N.V.
NL-5621 BA Eindhoven (NL)
Etats contractants désignés:
DE GB NL

(72) Inventeurs:
• Makram-Ebeid, Shérif
F-75008 Paris (FR)
• Breitenstein, Jacques
F-75008 Paris (FR)

(74) Mandataire: Lottin, Claudine
F-75008 Paris (FR)

(54) **Procédé et dispositif pour détecter des points clés situés sur le contour d'un objet**

(57)    L'invention concerne un procédé de traitement d'images pour détecter automatiquement des pixels clés ($K_2$, $K_3$, $K_4$) situés sur le contour d'un objet (LV) dans une image initiale ($I_0$), et un dispositif pour mettre en oeuvre ce procédé. Ce procédé comprend des étapes de : mémorisation, dans l'image initiale ($I_0$) numérisée, de l'intensité des pixels [$A_0(x,y)$] et de données de régions de l'objet (LV) classées ($C_1\ C_m$) ; de sélection de pixels d'intérêt (PI), sur le contour, à l'intérieur et à l'extérieur de l'objet (LV) ; de génération de caractéristiques ($E_1\ E_k$) pour chacun des pixels d'intérêt (PI) ; de classification des pixels d'intérêt (PI) dans lesdites classes ($C_1\ C_m$) ; et de sélection des pixels clés ($K_2$, $K_3$, $K_4$) dans des classes correspondantes ($C_2$, $C_3$, $C_4$).

L'invention concerne aussi un dispositif mettant en oeuvre ce procédé.

Application : Systèmes d'imagerie X numériques utilisés en cardiologie

FIG. 1

EP 0 692 772 A1

## Description

L'invention concerne un procédé de traitement d'images pour détecter automatiquement des points situés sur le contour d'un objet, référencés pixels clés dans une image référencée image initiale.

L'invention concerne également un dispositif pour mettre en oeuvre ce procédé.

L'invention trouve son application dans l'analyse automatique d'une image cardiologique du ventricule gauche.

Une image cardiologique peut être favorablement obtenue par un système de formation d'images de rayons X numérisées.

Une image cardiologique peut également être obtenue par d'autres moyens que les rayons X, et le procédé de traitement d'images selon l'invention pourra y être appliqué, car il ne dépend pas de la méthode par laquelle l'image a été obtenue.

La méthode la plus fréquemment utilisée à ce jour pour réaliser une image cardiologique consiste à injecter, vers le ventricule gauche d'un patient, un produit contrastant, et à enregistrer, pendant le temps d'efficacité du produit contrastant, une séquence d'images de ce ventricule gauche. Ces images permettent notamment au praticien, de déterminer le volume du ventricule gauche lors d'une contraction ventriculaire ou systole, et le volume du ventricule gauche lors d'une expansion ventriculaire ou diastole. Une quantité appelée fraction d'éjection est ensuite calculée comme la différence de ces volumes rapportée en pourcent du volume maximal de diastole. La connaissance de la fraction d'éjection est un élément important du diagnostic du praticien. Ces images permettent également au praticien, de déterminer deux points clés du ventricule gauche qui sont les points situés de part et d'autre de la valve aortique, et qui sont des repères fixes, et de déterminer un autre point clé qui est le sommet du ventricule gauche ou apex, dont la position varie entre le temps de diastole et le temps de systole. L'évaluation de la variation de distance entre l'apex et les points fixes aortiques, qui est appelé fraction de raccourcissement, est également un élément important du diagnostic du praticien.

Enfin la détermination du contour du ventricule gauche permet au praticien de détecter d'éventuelles anomalies de forme, et est également un élément important de son diagnostic.

Il est connu de l'état de la technique par la publication intitulée "Left Ventricular Contour Detection" : A Fully Automated Approach by PNJ van der ZWET et alii dans PROCEEDING COMPUTERS IN CARDIOLOGY, pp.359-362, October 11-14, 1992, Durham, North Carolina USA, dans IEEE Computer Society Press, Los Alamitos, California, USA, une approche automatisée pour la détection du ventricule gauche et en particulier de son contour, dans une image donnée. Ce système connu utilise une combinaison d'algorithmes pour détecter un modèle simplifié du contour du ventricule gauche. Le premier algorithme, un algorithme de segmentation pyramidale, segmente l'image de départ en un nombre assez grand de régions formées de boîtes carrées d'intensité homogènes. Le second algorithme utilise un réseau de neurones pour sélectionner les régions qui appartiennent le plus vraisemblablement au ventricule gauche. Ces régions sont ensuite fondues puis les pixels regroupés comme appartenant tous au ventricule gauche sont extraits pour forme le modèle. Après la détection du modèle, le contour effectif est trouvé par programmation dynamique. La position de la valve aortique est déduite à partir de la forme du contour détecté.

Selon ce procédé connu, une pyramide d'images consiste en un nombre d'images ayant chacune la moitié de la taille de l'image précédente. Une image est générée en filtrant par un filtre passe-bas l'image précédente et en échantillonnant à une fréquence d'échantillonnage moitié. De cette manière un empilement de couches d'images peut être obtenu.

Tout d'abord les couches de la pyramide sont générées en utilisant des filtres gaussien passe-bas pour empêcher l'échantillonnage illégal (en anglais : aliasing), puis le rééchantillonnage de chaque couche à résolution moitié est effectué. L'image de plus basse résolution dans la pyramide est une matrice de 16 x 16 pixels. Chaque image est segmentée en utilisant la segmentation des images précédentes de moindre résolution comme guide. L'image qui a la résolution la plus basse est segmentée par une technique de détection de bord. Selon le gradient dans l'image à basse résolution, on assigne à certains pixels l'étiquette "bord". Des groupes de pixels qui sont complètement entourés par les pixels "bord" et qui sont en relation les uns avec les autres sont étiquetés "région séparée". Finalement, tous les pixels "bord" restants sont étiquetés dans au moins une des régions précédemment trouvées, ou bien, si leur niveau de gris diffère trop de tout autre région environnante, on leur attribue une nouvelle étiquette. Le résultat de cette segmentation contient un grand nombre de régions consistant en seulement un pixel, spécialement au alentours des bords. Il n'y a que dans les régions les plus homogènes de l'image, à l'intérieur du ventricule, la région du poumon ou du diaphragme, que des régions de plus d'un pixel peuvent être trouvées.

La segmentation de l'image de plus bas niveau de résolution est utilisée pour obtenir une segmentation des images ayant une résolution plus élevée. Chaque pixel dans l'image de résolution plus élevée correspond à un petit nombre de pixels dans les objets de la couche la plus basse. Le pixel peut seulement être assigné à un de ces objets. Un pixel spécifique est assigné à l'objet le plus vraisemblable dans un sens statistique. Il est possible, durant l'assignement d'une étiquette, que l'objet se partage en plusieurs groupes de pixels sans corrélation dans l'image de résolution plus élevée. Une procédure de réétiquetage ultérieure à l'assignement, réétiquette l'objet partagé en un certain nombre d'étiquettes d'objets différents.

Ce processus continue jusqu'à ce que l'image de plus haute résolution ait été segmentée. La segmentation de l'image de plus haute résolution est utilisée en combinaison avec un réseau de neurones pour obtenir la segmentation finale.

Ce réseau de neurones est conçu pour la détection de la position du ventricule gauche dans une image qui a été réduite par un filtrage passe-bas et un sous-échantillonnage 16 x 16. Ce réseau de neurones a trois couches. La première couche est l'image basse résolution qui est obtenue par filtrage passe-bas puis rééchantillonnage du ventriculogramme initial. Le filtrage passe-bas est utilisé pour empêcher l'échantillonnage illégal (aliasing). La deuxième et la troisième couches contiennent chacune 256 neurones. Chacun de ces neurones reçoit l'entrée de 25 éléments de la couche précédente à travers un poids séparé pour chaque entrée. La fonction sigmoïde utilisée pour calculer enfin les niveaux de sortie est une fonction continue. Ceci permet d'utiliser le réseau de neurones comme un module de contrôle dans l'algorithme de détection du modèle. L'algorithme de segmentation pyramidale utilisé en premier résulte en de nombreuses différentes régions qui devraient toutes être incluses dans le ventricule gauche final. D'autre part la résolution des résultats du réseau de neurones est trop faible (16 x 16) pour définir proprement le modèle ventriculaire. En outre les résultats de la segmentation sont sensibles à la valeur du seuil, ce qui est requis pour séparer le ventricule du fond.

En combinant les résultats des deux algorithmes, une meilleure segmentation a été obtenue selon ce document cité.

Pour chaque objet étiqueté dans la segmentation pyramidale, une valeur moyenne est calculée. Le résultat du réseau de neurone est étendu à la résolution de la couche la plus élevée dans la pyramide. La moyenne de chaque objet est alors calculée par sommation des valeurs des résultats du réseau de neurones et division par le nombre de pixels dans l'objet. De larges régions dans le ventricule vont correspondre à des points du réseau de neurones avec des fortes probabilités. Il en est de même des grandes régions extérieures au ventricule. Il n'y a que sur les bords du ventricule que la segmentation pyramidale consiste en un grand nombre de petites régions. Leur probabilité d'être incorporées dépendra de la valeur du seul neurone auquel elles correspondent. Même si quelques erreurs peuvent être commises, en assignant au ventricule un objet qui ne devrait pas l'être, celà n'a pas grande influence sur le modèle finalement détecté.

Le modèle est finalement obtenu en combinant toutes les régions internes au ventricule, et en en faisant l'extraction du reste de l'image. A la fin du traitement restent donc seulement deux classes : les pixels appartenant au ventricule et les pixels n'y appartenant pas.

Une fois le modèle trouvé, les techniques de programmation dynamiques sont appliquées pour détecter le contour du ventricule gauche ; ces techniques sont connues de l'homme du métier.

L'algorithme enseigné par la publication citée utilise les courbes du contour pour déterminer la position de la valve aortique. Pour cela, on suppose que les extrémités de la valve sont des points de contour ayant un maximum de courbure d'à peu près 90°. Pour éviter de choisir d'autres maxima comme point d'extrémité de valve, le calcul d'angle des points d'extrémité de valve est pondéré. Pour les ventriculogrammes, cet angle est à peu près le même pour tous les patients.

Finalement les points d'extrémité de valve et le contour du ventricule sont affichés, et l'utilisateur peut corriger le contour et redessiner la valve. A la suite de quoi, les techniques de programmation dynamique sont appliquées seulement aux parties corrigées du ventricule. Lorsque à la fois le contour et les points d'extrémité de valve ont été déterminés pour le temps de diastole et le temps de systole, et après que l'utilisateur ait fait des corrections, alors les paramètres techniques sont calculés.

Un inconvénient du système décrit dans le document cité est qu'il utilise un réseau de neurones très important ayant un grand nombre d'entrées, 256 entrées, et un grand nombre de sorties, 256 sorties, avec des couches cachées très riches. Donc les poids sont difficiles à déterminer et l'apprentissage nécessite une base de données très importante.

De plus, ce système connu ne fournit finalement que le modèle d'une façon imprécise, en effectuant la classification des pixels en seulement 2 classes, celle des pixels internes et celle des pixels externes, et déduit seulement la localisation de 2 pixels clés, qui sont les pixels d'extrémités de valve. La localisation de l'apex n'est pas fournie de manière automatique.

Compte tenu des exigences de plus en plus grandes des techniques médicales, il a été trouvé que le système décrit dans le document cité n'est pas assez précis ni assez complet et qu'une autre solution doit être recherchée.

A ce jour, dans une nouvelle approche, l'homme du métier envisage une méthode pour obtenir l'analyse des images du ventricule gauche met tant en oeuvre deux étapes principales :

- une première étape de localisation des trois points clés formés par les deux extrémités de valve aortique et par l'apex, étape qui ne peut être actuellement réalisée de manière suffisamment précise que si elle est menée à bien à la main sur un ventriculogramme par le praticien lui-même, et qui implique donc obligatoirement une interaction humaine,

- une seconde étape dans laquelle les données précises des trois points clés sont fournies comme données de départ, par exemple manuellement par un opérateur, au moyen d'une souris à un ordinateur, en même temps que les données mémorisées relatives aux valeurs d'intensité liées à chaque pixel de l'image d'origine. Les positions des pixels localisés sur le contour du ventricule gauche sont alors calculées au moyen d'algorithmes déjà connus.

Lorsque les données relatives à la localisation des trois points clés sont fournies de manière précise dans la première étape, alors la seconde étape ne pose pas de problème et le résultat est que le contour du ventricule gauche est obtenu avec toute la précision souhaitée.

La présente invention vise donc principalement à fournir une méthode de localisation automatique des trois points clés précités :

- les deux points d'extrémité de la valve aortique,
- le sommet du ventricule gauche ou apex.

Par localisation automatique, on entend une détermination des coordonnées de ces points dans l'image cardiologique d'origine sans intervention humaine, avec une précision aussi grande ou meilleure que si cette localisation était faite par un opérateur humain.

L'avantage qui résulte de cette automatisation est que le traitement de l'image cardiologique peut se faire du début à la fin, directement, sans intervention humaine, et peut fournir une meilleure aide au diagnostic du praticien, par la mise à sa disposition rapide de tous les éléments importants du diagnostic qui ont été définis plus haut.

Selon l'invention ce but est atteint et les avantages sont obtenus au moyen d'un procédé de traitement d'images pour détecter automatiquement des points situés sur le contour d'un objet, référencés pixels clés dans une image référencée image initiale, ce procédé comprenant une première phase incluant des étapes de :

- mémorisation dans l'image initiale en forme de matrice bidimensionnelle de pixels des valeurs d'intensité de chaque pixel repéré par ses coordonnées,
- mémorisation dans l'image initiale de données de régions de l'objet référencées classes incluant des classes référencées classes correspondantes contenant respectivement les pixels clés à détecter :
- sélection de pixels de l'image initiale référencés pixels d'intérêt, sur le contour, à l'intérieur et à l'extérieur de l'objet ;
- génération d'un premier vecteur de caractéristiques pour chacun des pixels d'intérêt ;
- classification des pixels d'intérêt dans lesdites classes de l'objet à partir de leur vecteur de caractéristiques respectif.

L'avantage de cette nouvelle façon d'effectuer la classification des pixels de l'image est que l'homme du métier, à la fin de cette phase possède de nombreuses informations locales et contextuelles concernant chaque pixel d'intérêt.

Selon l'invention, en outre, ce procédé comprend une seconde phase de sélection des pixels clés de la classe correspondante, comprenant en outre une deuxième phase incluant une étape de :

- sélection de chacun des pixels clés parmi les pixels d'intérêt de la classe correspondante.

L'avantage de ce procédé est qu'il permet de détecter ainsi 3 points clés, et non 2 comme selon l'état de la technique. Donc l'aide au diagnostic est accélérée, et la détection du contour du ventricule est ensuite plus précise et mieux automatisable.

Ce procédé est mis en oeuvre par un dispositif de traitement d'images pour détecter automatiquement des points situés sur le contour d'un objet, référencés pixels clés dans une image référencée image initiale, ce dispositif comprenant :

- des premiers moyens de stockage pour mémoriser, dans l'image initiale en forme de matrice bidimensionnelle de pixel, les valeurs d'intensité de chaque pixel repéré par ses coordonnées, et des données de régions de l'objet, référencées classes, incluant des classes référencées classes correspondantes contenant respectivement les pixels clés à détecter ;
- des moyens de sélection de pixels de l'image initiale, référencés pixels d'intérêt, sur le contour, à l'intérieur et à l'extérieur de l'objet ;
- des premiers moyens de calcul, pour générer un premier vecteur de caractéristiques pour chacun des pixels d'intérêt ;
- un premier réseau de neurones pour recevoir à ses entrées le premier vecteur de caractéristiques et pour effectuer une classification des pixels d'intérêt dans lesdites classes de l'objet à partir de leur vecteur de caractéristiques respectif.

En outre ce dispositif de traitement d'images comprend des moyens de sélection de chacun des pixels clés parmi les pixels d'intérêt de la classe correspondante.

L'avantage de ce dispositif est qu'il est complètement automatique.

L'invention est décrite ci-après en détail, en référence avec les figures schématiques annexées suivantes :

- la FIG.1 qui représente le ventricule gauche par le moyen de 10 différentes classes anatomiques,

- la FIG.2 qui représente l'image d'origine dont les pixels sont repérés dans un système d'axes de coordonnées,
- la FIG.3A qui représente l'image des pixels ayant des gradients maximaux, à l'exclusion de autres pixels de l'image d'origine,
- la FIG.3B qui représente les directions dans lesquelles les gradients sont calculés pour chaque pixel,
- la FIG.3C qui illustre la sélection du pixel ayant un gradient maximal dans une direction, pour la détection d'un bord,
- la FIG.3D qui illustre la sélection des pixels d'intérêt dans l'image d'origine,
- la FIG.3E qui représente l'image des pixels d'intérêt sélectionnés,
- la FIG.4A qui illustre la formation de la pyramide d'images gaussiennes,
- la FIG.4B qui montre la fonction gaussienne d'un des filtres et la FIG.4C qui montre la fonction gaussienne d'un autre filtre, ces fonctions ayant des largeurs à mi-hauteur différentes,
- la FIG.5A qui montre une abaque de transformation log-polaire,
- la FIG.5B qui illustre le calcul des moyennes d'intensité des pixels dans les secteurs circulaires de l'abaque log-polaire,
- la FIG.6A qui montre un neurone,
- la FIG.6B qui montre le premier réseau de neurones,
- la FIG.6C qui montre le second réseau de neurones.
- la FIG.7A illustre les étapes de délimitation d'une région de recherche réduite, dans les classes de pixels clés, pour parvenir à établir une fonction de coût,
- la FIG.7B illustre la détection des pixels clés d'extrémité de valve dans les régions de recherche réduites des classes d'extrémité de valve,
- la FIG.7C illustre la condition d'isocélité qui lie les 3 pixels clés, et montre les conditions de distance entre pixels, qui en résultent,
- la FIG 8 illustre schématiquement par un diagramme de blocs un dispositif pour mettre en oeuvre le procédé.

L'invention est décrite ci-après dans un exemple de mise en oeuvre non limitatif. Les dimensions des images utilisées, l'écart-type des fonctions gaussiennes, les pas d'échantillonnage, le nombre des caractéristiques choisi pour mener à bien le procédé décrit ci-après, etc, peuvent varier selon les nécessités particulières qui peuvent apparaître à l'homme du métier.

L'invention peut être appliquée à d'autre domaines que la cardiographie.

## PROCEDE

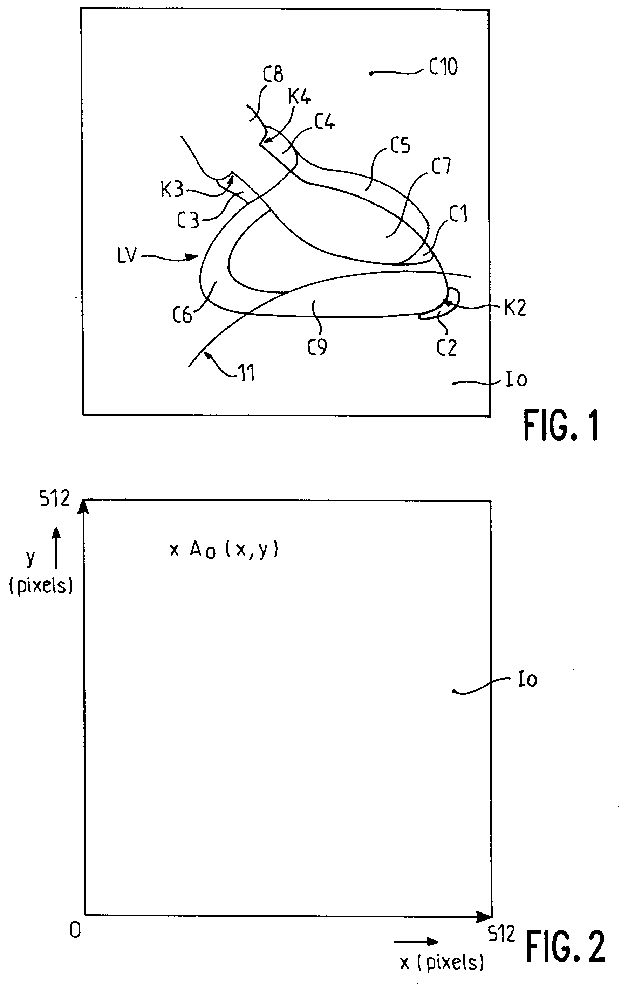

En référence avec la FIG.1, on décrit ci-après une méthode de localisation automatique de trois pixels clés K3, K4, K2 dans l'image cardiologique $I_0$ du ventricule gauche LV, ou ventriculogramme. Ces pixels clés sont :

- les deux extrémités de la valve aortique, K3, K4 ;
- le sommet du ventricule ou apex, K2, lorsqu'il est inférieur au diaphragme 11.

En référence avec la FIG.2, le ventriculogramme est une image numérisée $I_0$ du ventricule gauche LV dans laquelle chaque pixel courant $A_0(x,y)$ est caractérisé par ses coordonnées x,y selon deux axes de coordonnées relatifs à l'image, et par son intensité. Cette intensité est, dans l'exemple qui est décrit ci-après, codée en niveaux de gris, par exemple de 0 à 255, l'intensité la plus grande correspondant au niveau le plus haut, c'est-à-dire aux pixels les plus clairs.

De plus, dans l'exemple décrit ci-après en référence avec la FIG.2, l'image numérisée d'origine $I_0$ est formée de 512 x 512 pixels, c'est-à-dire 512 pixels selon l'axe des x, et 512 pixels selon l'axe des y. C'est l'image de résolution la plus grande dans ce cas.

La méthode de localisation de ces trois pixels clés dans l'image cardiologique numérisée du ventricule gauche comprend essentiellement deux phases :

## EP 0 692 772 A1

**I/ PREMIERE PHASE :** Classification en un nombre de régions anatomiques.

Dans cette première phase on effectue la classification des pixels courant $A_0(x,y)$ en un certain nombre m de classes, numérotées C1, C2... Cm correspondant à des régions anatomiques précises du ventricule gauche.

TABLEAU I

| N° de classe C | Description de la classe |
|---|---|
| 1 | Apex projeté au-dessus du diaphragme |
| 2 | Apex projeté en dessous du diaphragme |
| 3 | Extrémité postérieure de la valve de l'aorte |
| 4 | Extrémité antérieure de la valve de l'aorte |
| 5 | Bord antérieur du ventricule gauche |
| 6 | Bord postérieur du ventricule gauche |
| 7 | Pixels internes au ventricule gauche |
| 8 | Pixels internes à l'aorte |
| 9 | Pixels internes au ventricule et inférieurs au diaphragme |
| 10 | Pixels externes au ventricule |

Dans cette première phase en référence avec le Tableau I et la FIG.1, on effectue par exemple, de préférence la classification des pixels $A_0(x,y)$ de l'image $I_0$ d'origine, en un nombre m = 10 classes. Certaines classes, telles que la classe C7 qui concerne les pixels internes au ventricule gauche, ou la classe C10 qui concerne les pixels externes au ventricule gauche sont des classes qui comprennent dans l'image d'origine $I_0$, 512 x 512, un grand nombre de pixels ayant des intensités assez homogènes. Au contraire, les classes C1 et C2 qui concernent l'apex, ou bien les classes C5 et C6 qui concernent les bords antérieurs et postérieurs du ventricule sont des classes qui comprennent divers pixels dont l'intensité varie rapidement d'un pixel à son voisin.

Il a été trouvé que pour déterminer les coordonnées de chacun des 3 pixels clés K2, K3, K4, il était nécessaire, dans un premier temps, de localiser chaque pixels $A_0(x,y)$ de l'image $I_0$ d'origine par rapport à une région anatomique Ci (i est un numéro de classe compris entre 1 et m) du ventricule gauche. En effet, il est apparu que l'on ne pouvait pas localiser précisemment ces 3 pixels clés en utilisant uniquement des informations locales, par exemple en s'appuyant uniquement sur la variation d'intensité près de l'apex, ou sur la variation de courbure à l'emplacement des extrémités de la valve aortique comme cela est fait dans l'état de la technique.

Il a été trouvé qu'il fallait prendre en compte à la fois des informations locales -puisque chacun des 3 pixels clés est sur le contour de venticule gauche et puisque dans les régions de contour les informations varient rapidement-, et des informations contextuelles- puisque chacun des 3 pixels clés a une position bien précise vis-à-vis des autres régions anatomiques du ventricule gauche.

Cette première phase comprend :

**Ia) PREMIERE ETAPE** : Détermination de pixels d'intérêt PI.

Dans cette étape, l'image de départ 512 x 512 est sous-échantillonnée en une image 64 x 64 ; ceci est fait néanmoins de manière à conserver dans cette image sous-échantillonnée, les pixels du contour du ventricule gauche.

Le but de cette première étape est de diminuer le nombre de pixels à traiter, afin de diminuer le temps de calcul. Néanmoins, dans ce sous-échantillonnage, on ne peut pas se permettre d'éliminer les pixels de contour du ventricule gauche puisque les 3 pixels clés à localiser ne peuvent se trouver que sur ce contour. En même temps que l'image d'origine est sous-échantillonnée, les pixels de contour du ventricule gauche doivent être conservés : cette image sous-échantillonnée contient alors tous les pixels d'intérêt PI.

Cette étape de sous-échantillonnage est menée à bien au moyen des sous-étapes suivantes :

**Ia1) PREMIERE SOUS-ETAPE :** Formation de "l'image I(GM) des gradients avec élimination des gradients non-maximaux"

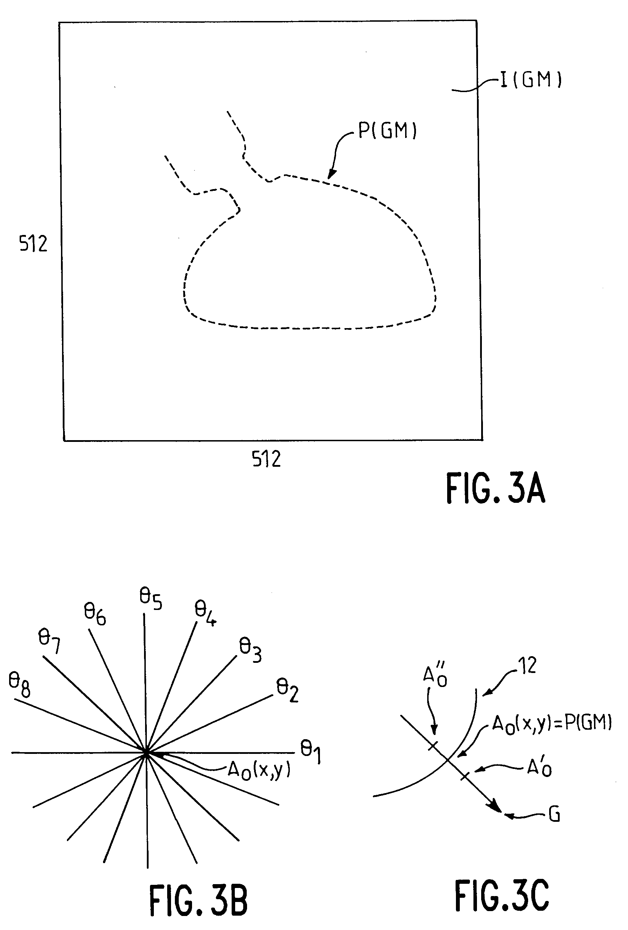

En référence avec 1a FIG.3A, cette première sous-étape permet la détection des pixels P(GM) de contour du ventricule gauche par une technique de détection de bord.

En chaque pixel $A_0(x,y)$ de l'image d'origine $I_0$, le gradient d'intensité G est calculé. Sont retenus comme pixels de cette "image des gradients" I(GM) uniquement les pixels P(GM) où le gradient d'intensité est maximal. Le gradient d'intensité en chaque pixel est obtenu par le passage sur l'image d'origine d'un "filtre gradient", connu de l'homme du métier, qui calcule la dérivée de l'intensité dans le sens de l'axe des x, formant la première composante du vecteur gradient, la dérivée de l'intensité dans le sens des y, formant la seconde composante du vecteur gradient et le module du vecteur gradient.

En référence avec la FIG.3B, cette opération est répétée en tournant le filtre régulièrement d'un angle $\pi/8$ par exemple ; c'est-à-dire que le calcul du gradient est effectué dans 8 orientations $\Theta_1$ à $\Theta_8$ de l'espace autour de chaque pixel $A_0(x,y)$. La direction locale dans laquelle le gradient est maximal est alors repérée et mémorisée.

En référence avec la FIG.3C, dans cette direction de gradient maximal, et dans un petit voisinage, par exemple parmi 3 pixels comprenant le pixel courant $A_0$ et les deux pixels $A'_0$ et $A''_0$ situés de part et d'autre de ce pixel courant dans cette direction, on retient uniquement le pixel P(GM) dont le gradient est maximal. Sur la FIG.3C, on a illustré que le pixel P(GM) coïncidait avec $A_0$.

Les valeurs des intensités des pixels dont les gradients ne sont pas maximaux sont mises à zéro. "L'image des gradients" I(GM) ne contient donc finalement que les pixels P(GM) dont les gradients sont maximaux, comme montré sur la FIG.3A.

La formation de cette "image des gradients avec élimination des gradients non maximaux" est une "technique de détection de bords". En appliquant cette technique sur l'image 512 x 512 d'origine, on obtient une image dont tous les pixels sont éliminés par rapport à cette image d'origine, sauf les pixels situés sur le contour du ventricule gauche, ainsi qu'un certain nombre de pixels situés sur des bords parasites.

Les coordonnées et les intensités de ces pixels P(GM) de "l'image des gradients" I(GM) sont mémorisées. Les directions locales des gradients maximaux sont également gardées en mémoire.

**Ia2) SECONDE SOUS-ETAPE :** Formation de l'image des pixels d'intérêt I(PI).

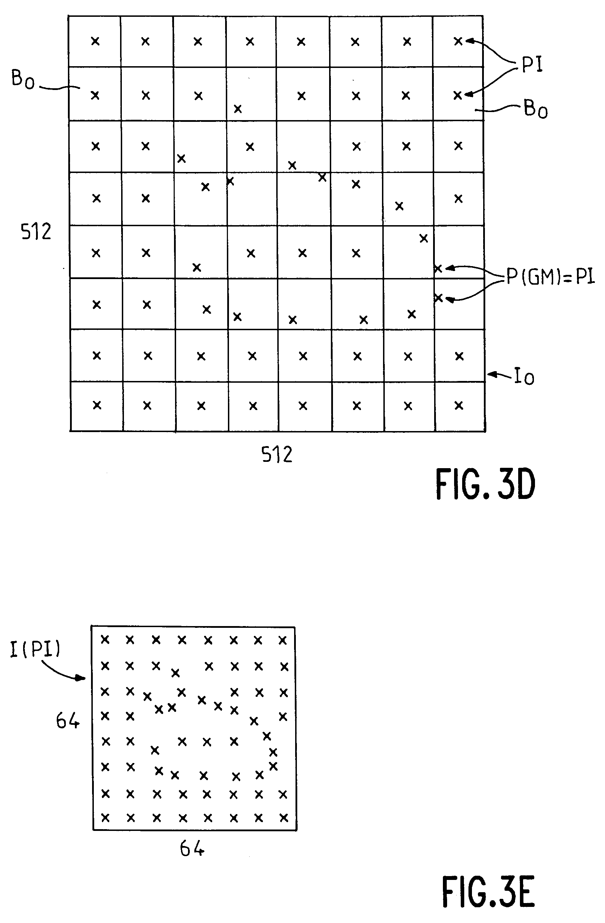

En référence avec les figures 3D et 3E, on cherche à obtenir, à partir de l'image d'origine $I_0$, une image sous-échantillonnée 64 x 64 contenant uniquement les pixels d'intérêt PI, dite "image des pixels I(PI) d'intérêt". A cet effet, on divise l'image d'origine $I_0$, 512 x 512, en boîtes $B_0$, par exemple contenant 8 x 8 pixels, et on sélectionne comme pixel d'intérêt PI, seulement 1 pixel par boite.

En référence avec la FIG.3D, la sélection des pixels d'intérêt PI est effectuée à partir de la combinaison des informations contenues dans l'image d'origine $I_0$ et des informations contenues dans "l'image des gradients avec élimination des gradients non maximaux" I(GM).

Chaque boîte courante $B_0$ est examinée :

. Si dans cette boite "l'image des gradients" I(GM) ne contient que des pixels dont l'intensité a été mise à zéro, c'est-à-dire ne contient pas de pixel dont le gradient est maximal, alors on sélectionne le pixel de l'image 512 x 512 qui est positionné au centre de la boîte : ce pixel devient un pixel d'intérêt PI,

. Si dans la boîte, "l'image des gradients" I(GM) contient un pixel P(GM), on sélectionne ce pixel comme étant un pixel d'intérêt PI,

. Si dans la boîte, "l'image des gradients" I(GM) contient plusieurs pixels P(GM), on sélectionne un seul pixel : on retient celui qui a le gradient le plus grand parmi les gradients maximaux, pour constituer un pixel d'intérêt PI.

En référence avec la FIG.3E, l'intensité et les coordonnées de tous les pixels PI sélectionnés sont mémorisées. Ces pixels d'intérêt PI sélectionnés forment une image 64 x 64 sous-échantillonnée dite des pixels d'intérêt I(PI). Ces pixels d'intérêt PI sont régulièrement répartis sur cette image dans les zones où le ventriculogramme $I_0$ ne contient pas de bords, et ils sont sur les bords, dans les zones où ces bords existent dans le ventriculogramme.

La première phase comprend en outre :

**Ib) SECONDE ETAPE :** Génération d'un vecteur de E1 à $E_k$ caractéristiques pour chaque pixel d'intérêt.

Dans cette seconde étape, on construit une imagette Ij(PI) par pixel d'intérêt PI, soit en tout 64 x 64 = 4096 imagettes (avec j = 1 à 4096) qui contiennent chacune entre 100 et 256 informations relatives à un des pixels d'intérêts, parmi lesquelles des informations locales, c'est-à-dire relatives à un petit voisinage du pixel d'intérêt PI, et des informations contextuelles, c'est-à-dire relatives à des régions éloignées du pixel d'intérêt PI.

Ces informations peuvent être aussi référencées comme formant un vecteur de caractéristiques attribué à chaque pixel d'intérêt PI.

Pour réunir ces informations locales et contextuelles, plusieurs méthodes sont possibles. Deux méthodes vont être décrites ci-après.

La première méthode décrite est fondée sur une transformation log-polaire ; la seconde méthode décrite est fondée sur une méthode de filtrage pour calculer des opérateurs différentiels. Chacune des méthodes est appliquée sur un certain nombre d'images sous-échantillonnées ayant subit un filtrage passe-bas de manière à limiter au mieux le temps de calcul dans leur mise en oeuvre.

**Ib1) SOUS-ETAPE PRELIMINAIRE :** Filtrage multirésolution pour former une pyramide d'images gaussiennes $I_0$ à $I_7$.

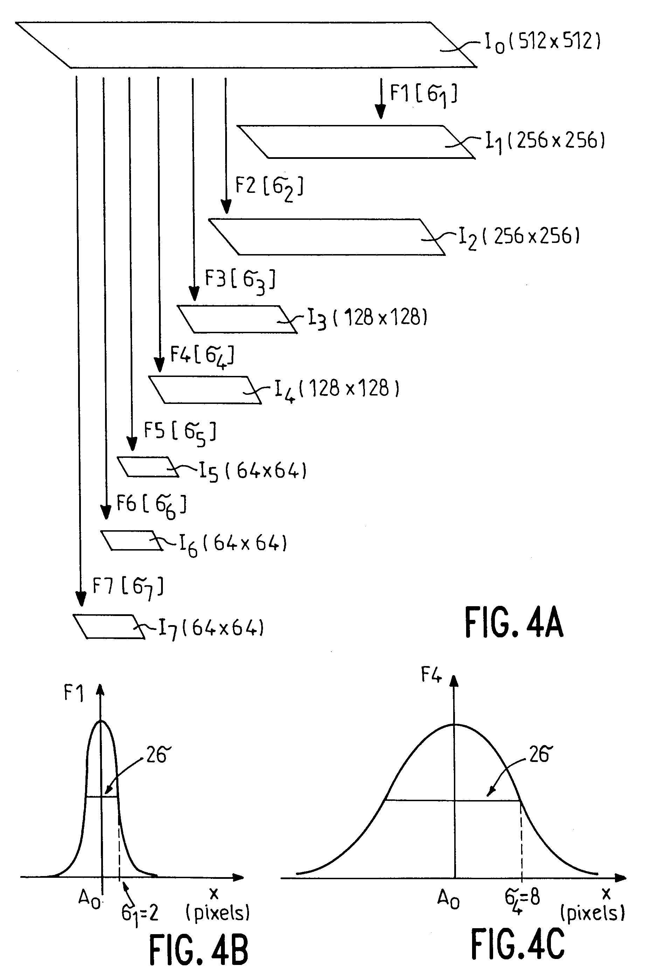

A cet effet, en référence avec les FIG.4A, 4B, 4C, l'image $I_0$ 512 x 512 est soumise à un filtre passe-bas F1 ayant pour noyau une fonction gaussienne isotrope dont l'écart-type (la largeur à mi-hauteur) $\sigma_1$ détermine la résolution de l'image obtenue par filtrage. Par le moyen d'un tel filtrage, les détails de l'image $I_0$ sont lissés. Pour ce premier filtrage, on peut par exemple utiliser une fonction gaussienne ayant $\sigma_1 = 2$ pixels. Ensuite l'image $I_0$ est sous-échantillonnée en adoptant par exemple une fréquence d'échantillonnage moitié, c'est-à-dire un pas D d'échantillonnage égal à 2 pixels ; et une image 256 x 256 est ainsi formée.

En référence avec la FIG.4A, par des filtrages successifs F1 et F7 au moyen de filtres ayant pour noyau des fonctions gaussiennes isotropes avec des valeurs de a de plus en plus grandes, $\sigma_1$ à $\sigma_7$, et en adoptant un pas d' échantillonnage approprié, on obtient des images sous-échantillonnées de plus en plus petites, tout en évitant les problèmes d' échantillonnage illégal (aliasing). Ces images peuvent être obtenues à diverses résolutions en fonction du a choisi.

On peut ainsi former 7 images, sous-échantillonnées et à diverses résolutions.

Par exemple à partir de l'image $I_0$ 512 x 512

avec F1 ayant $\sigma_1 = 2$ et D = 2 on obtient $I_1$ à 256 x 256
F2 ayant $\sigma_2 = 3$ et D = 2 on obtient $I_2$ à 256 x 256
F3 ayant $\sigma_3 = 5$ et D = 4 on obtient $I_3$ à 128 x 128
F4 ayant $\sigma_4 = 8$ et D = 4 on obtient $I_4$ à 128 x 128
F5 ayant $\sigma_5 = 12$ et D = 8 on obtient $I_5$ à 64 x 64
F6 ayant $\sigma_6 = 16$ et D = 8 on obtient $I_6$ à 64 x 64
F7 ayant $\sigma_7 = 20$ et D = 8 on obtient $I_7$ à 64 x 64

où les différents filtres de F1 à F7 ont pour noyau les fonctions gaussiennes. Cette étape est dite étape de filtrage multirésolution, et les différentes images formées respectivement par les filtres F1 à F7, sont référencées $I_1$ à $I_7$ et forment avec $I_0$ l'image d'origine, une pyramide d'images gaussiennes.

**Ib2) PREMIERE METHODE PROPOSEE :** Transformation log-polaire.

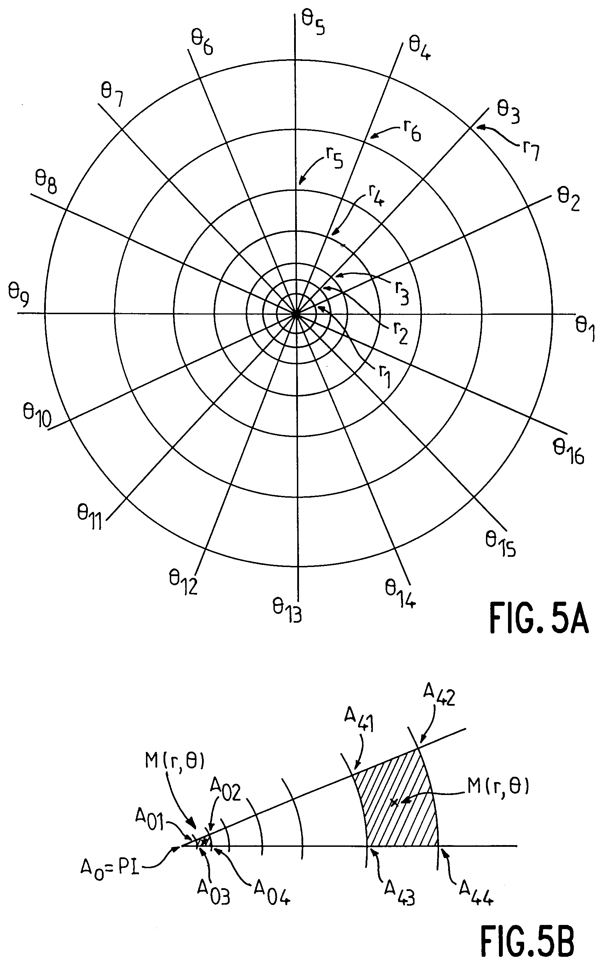

En référence avec les FIG.5A et 5B, la méthode de transformation log-polaire est une méthode de traitement d'image ayant des analogies avec la physiologie de la vision de l'être humain, qui est capable de juxtaposer des informations locales et contextuelles.

La méthode log-polaire est inspirée de cette physiologie qui enseigne que le centre de la rétine de l'oeil humain contient beaucoup plus de photodétecteurs que les alentours. Le centre de la rétine est appelé "fovéa" (du latin qui signifie dépression). La fovéa est l'endroit de la rétine où se trouve la plus grande concentration de bâtonnets et de cônes, et au fur et à mesure que l'on s'éloigne de ce centre, ces photorécepteurs se font de plus en plus rares.

De la même manière, on sélectionne des points de l'image $I_0$ de manière très dense autour d'un pixel courant $A_0(x,y)$, et au fur et à mesure que l'on s'écarte de ce pixel, on sélectionne des pixels à des distances de plus en plus grandes, sur des rayons écartés selon des angles répartis entre 0 et 360°.

Cette méthode log-polaire est fondée sur une abaque représentée sur la FIG.5A à l'aide de laquelle on détermine, à partir d'un centre, qui en l'occurence sera ici le pixel d'intérêt PI replacé grâce à ses coordonnées en $A_0$ dans l'image d'origine $I_0$, ou éventuellement dans une des images de la pyramide d'images gaussiennes, 16 axes régulièrement espacés d'un angle $\Theta = 2\pi/16$, repérés par $\Theta_1$ à $\Theta_{16}$, et sur ces axes, on détermine des longueurs, ou rayons, à partir du centre : r1, r2, r2... etc. Ces rayons sont en progression géométrique telle que :

$$r_n = p(r_{n-1})$$

où n est un nombre entier de 0 à 16 inclus et où p est un nombre réel inférieur à 1.

Les rayons r1, r2... et les angles $\Theta_1$, $\Theta_2$,.. déterminent ainsi autour de chaque pixel d'intérêt PI des secteurs circulaires de surfaces de plus en plus étendue au fur et à mesure que l'on s'éloigne du centre.

En référence avec la FIG.5B, tous les pixels situés dans les secteurs circulaires sont considérés, et la moyenne de leur intensité dans chaque secteur est calculée. Les pixels situés dans les secteurs circulaires sont recherchés dans les différentes images de la pyramide de gaussiennes, comme expliqué ci-après.

Lorsque le secteur circulaire est délimité par deux rayons de grande valeur, la surface de ce secteur est grande et la moyenne serait calculée sur un grand nombre de pixels si l'image considére pour ce calcul était l'image à pleine résolution $I_0$. Donc l'information fournie par ce secteur circulaire est globale ou contextuelle, c'est-à-dire relative à une région éloignée du pixel d'intérêt PI et relative en même temps à une région de grande surface.

Lorsque le secteur circulaire est délimité par deux rayons de petites valeur, au contraire, la moyenne est calculée sur un petit nombre de pixels, donc l'information est locale, c'est-à-dire relative à une région peu éloignée du pixel d'intérêt et de faible surface.

On calcule la moyenne des intensités dans chaque secteur circulaire en s'aidant des images $I_0$ à $I_7$ déterminées précédemment. A cet effet, on cherche l'image dont la résolution est telle que 4 de ses pixels voisins coïncident avec les quatre pixels qui délimitent le secteur circulaire : dans ce cas la moyenne à effectuer correspond au calcul, par interpolation, de l'intensité d'un point M situé au centre du carré délimité par les 4 pixels de l'image sous-échantillonnée. Ensuite l'intensité de ce point M, calculée par cette interpolation, ainsi que les coordonnées de ce point en r et $\Theta$, sont mémorisées.

En référence avec la FIG.5B, il apparaît donc, que grâce à cette méthode, lorque l'on cherche à réaliser la moyenne des intensités dans un secteur angulaire délimité par des petits rayons ayant par exemple 4 pixels de coins $A_{01}$, $A_{02}$, $A_{03}$, $A_{04}$, on va chercher les 4 pixels nécessaires à l'interpolation, dans une image faiblement sous-échantillonnée qui est en même temps une image de résolution élevée, par exemple l'image $I_0$ ou bien une image $I_1$ ou $I_2$. Plus les rayons sont grands, délimitant un secteur circulaire ayant par exemple 4 pixels de coins $A_{41}$, $A_{42}$, $A_{43}$, $A_{44}$, plus on ira chercher les 4 pixels nécessaires à l'interpolation dans une image fortement sous-échantillonnée qui est en même temps une image à faible résolution, par exemple $I_3$ à $I_7$.

D'un point de vue pratique, les images fortement sous-échantillonnées sont des images dans lesquelles les pixels qui ont été retenus par l'application du pas d'échantillonnage D sur une image moins sous-échantillonnée précédente, ont été resserrés, de sorte que ces images sous-échantillonnées sont de plus en plus petites par rapport à l'image $I_0$ d'origine.

Pour les calculs de moyenne des intensités d'un secteur circulaire donné, et donc pour faire coïncider les pixels délimitant ce secteur avec les pixels d'une image sous-échantillonnée, il faut alors d'abord diviser les rayons r1, r2... du secteur circulaire par un nombre qui tient compte des pas d'échantillonnage utilisés pour arriver à l'image sous-échantillonnée que l'on utilisera pour faire l'interpolation.

Lorsque l'on effectue l'interpolation entre les 4 pixels trouvés dans l'image sous-échantillonnée, on obtient toute l'information recherchée, car les filtrages successifs font en sorte que les images les plus sous-échantillonnées sont aussi les plus lissées, ou encore, selon l'expression de l'homme du métier : moyennées. Ainsi on obtient bien des informations locales à proximité du pixel d'intérêt PI dans les secteurs circulaires de petits rayons, et des informations globales à distance de ce dernier, dans les secteurs circulaires de grands rayons.

Par cette méthode de transformation log-polaire, chacun des 4096 pixels d'intérêt PI sélectionnés est muni d'un nombre k de 256 caractéristiques qui sont les 256 intensités trouvées aux pixels $M(r,\Theta)$ par interpolation, aux 16 rayons et 16 angles choisis (donc k = 256).

Ces 256 caractéristiques forment pour chaque pixel PI un "vecteur de 256 caractéristiques". Ces caractéristiques peuvent aussi être considérées comme formant une imagette Ij, (avec j = 1 à 4096) soit 4096 imagettes en tout, correspondant aux 4096 pixels d'intérêt, ayant des pixels M repérés par un rayon r et un angle $\Theta$, et dotés d'une intensité calculée par l'interpolation décrite précédemment.

Dans le but de réduire le nombre d'informations sans réduire la qualité du résultat recherché, qui est dans cette phase la détermination de 10 classes anatomiques C1 à C10 dans l'image cardiologique, et finalement la détermination des 3 pixels clés, on peut choisir en alternative la deuxième méthode exposée ci-après.

**Ib3) SECONDE METHODE PROPOSEE :** Filtrage récursif pour appliquer des opérateurs différentiels.

Cette méthode inclut la mise en oeuvre d'une batterie de filtres dont le nombre k est seulement de l'ordre de ou légèrement supérieur à 100 (donc k $\simeq$ 100).

Ces filtres comprennent une première batterie de filtres récursifs orientables, et un certain nombre de filtres particuliers.

**\* LES FILTRES RECURSIFS ORIENTABLES**

Dans l'étape précédente de filtrage multirésolution où l'image d'origine $I_0$ a été sous-échantillonnée et filtrée passe-bas, on a obtenu un certain nombre d'images $I_0$ à $I_7$ à différentes résolutions formant la pyramide d'images gaussiennes. Ces images présentent des niveaux de gris de plus en plus lissés au fur et à mesure que la résolution devient de plus en plus grossière, c'est-à-dire des niveaux de gris qui varient de plus en plus lentement.

Après cette étape de filtrage multirésolution, une série de calculs est effectuée qui consiste :

- à placer les pixels d'intérêts PI dans chacune des images de la pyramide de gaussiennes et à évaluer leur intensité ;
- à évaluer numériquement les dérivées jusqu'à l'ordre 4, en chacun de ces pixels d'intérêt, dans chaque image résultante $I_0$ à $I_7$, au moyen de filtres orientables connus sous le nom de filtres de SOBEL.

Ces calculs fournissent, pour chaque pixel d'intérêt PI, et pour chacune des images de la pyramide de gaussiennes :

- à l'ordre 0 :

  . la fonction de convolution de la fonction gaussienne par l'intensité qui constitue la valeur moyenne de l'intensité au pixel courant
  . A l'ordre 1 :
  . la dérivée première selon l'axe des x, la dérivée première selon l'axe des y, de la fonction à l'ordre 0 qui constituent le gradient d'intensité,
  . la dérivée seconde selon l'axe des x, la dérivée seconde selon l'axe des y, de la fonction à l'ordre 0,
  . la dérivée mixte en xy, de cette fonction à l'ordre 0. Et de même toutes les dérivées selon x, selon y et les dérivées mixtes sont calculées à l'ordre 3 et à l'ordre 4. Ces valeurs constituent un développement limité construit en réalisant une combinaison linéaire des dérivées successives des fonctions de convolution ou images lissées.

Chacun des membres du polynôme constitué par les dérivées aux ordres 0 à 4 renforcent un détail caractéristique de l'image à laquelle ils sont appliqués.

En tout 15 filtres sont nécessaires pour calculer tous les éléments du polynôme de l'ordre 0 à l'ordre 4. Et ces calculs peuvent être effectués pour les 7 images $I_0$ à $I_7$ de résolutions différentes définies précédemment. D'où il résulte que 105 filtres sont alors nécessaires pour effectuer ces calculs.

Autrement dit, on prélève, pour chaque pixel d'intérêt PI, un jeu de caractéristiques sur l'image à haute résolution, un autre jeu de caractéristiques sur l'image de résolution inférieure, encore un autre jeu de caractéristiques dans l'image de résolution encore inférieure, etc.

La réponse de chacun des filtres constitue 1 caractéristique. Cette caractéristique n'est attribuée qu'à chaque pixel d'intérêt PI. Donc en tout 105 caractéristiques peuvent être calculées pour chacun des 4096 pixels d'intérêt PI.

On peut diminuer le nombre des caractéristiques en appliquant un nombre limité de filtres aux images de plus basse résolution parmi les 7 résolutions. Ainsi, au lieu d'appliquer 15 filtres à ces images basse-résolution, on peut se limiter à appliquer seulement les filtres fournissant les calculs à l'ordre 0, 1 et 2 pour les moyennes résolutions soit 7 filtres ; puis seulement les filtres fournissant les calculs à l'ordre 0 et 1, pour les très basses résolutions, soit 3 filtres.

On arrive ainsi à caractériser très correctement l'image d'origine en utilisant seulement une batterie d'environ 80 filtres appliqués et répartis, comme défini plus haut, aux 7 images ayant diverses résolutions.

En tout on peut affecter à chaque pixel d'intérêt PI sélectionné 80 caractéristiques.

## * LES FILTRES PARTICULIERS

A ces premières 80 caractéristiques, on peut adjoindre des caractéristiques plus typiques du problème particulier que l'on veut traiter : ce problème particulier est relatif au cas du ventricule gauche. Par exemple, ces caractéristiques ajoutées peuvent être :

- le module du gradient à une des résolutions qu'on a choisi,
- la direction de ce gradient.

A cet effet, lors de la construction de "l'image des gradients avec élimination des non-maximaux" I(GM), on a calculé les deux composantes du vecteur gradient, dans le sens des x et dans le sens des y. On en a déduit son module. D'autre part pour déterminer les pixels de gradients maximaux, on a calculé la direction de ces gradients maximaux parmi 8 directions. Ces informations ont été mémorisées. De telles informations peuvent constituer des caractéristiques additionnelles.

La direction du gradient est en effet particulièrement intéressante, quand on sait que la direction du gradient de chacun des 3 pixels clés que l'on cherche finalement à localiser, est une constante dans tous les ventriculogrammes, chez tous les patients.

- la courbure locale des lignes équiniveau de gris.

On peut aussi évaluer une autre caractéristique intéressante qui est la courbure locale des lignes équiniveaux de gris qui passent par un pixel $A_0(x,y)$ courant.

La batterie des filtres de SOBEL précédemment décrite fournit déjà les dérivées premières dans le sens des x et y, les dérivées secondes dans ces deux directions, et les dérivées mixtes de la fonction de convolution. Il existe à partir de là, des formules mathématiques connues de l'homme du métier pour calculer la courbure locale d'une ligne équiniveau de gris. Ce calcul est effectué en utilisant plusieurs filtres à diverses résolutions. La courbure locale des lignes équiniveau de gris permet de connaître entre autres la courbure locale du contour du ventricule gauche.

A l'issue de ces filtrages récursifs formant des opérateurs différentiels, on a généré un vecteur d'environ 100 à 125 caractéristiques par pixel d'intérêt. Comme on a vu, en limitant le nombre des filtres en fonction de la résolution des images de la pyramide d'images gaussiennes auxquelles ils sont appliqués, on peut se contenter de 100 filtres générant donc un vecteur de 100 caractéristiques par pixel d'intérêt PI. On peut aussi dire que l'on a formé 4096 imagettes $I_j(PI)$ constituées de ces k caractéristiques (donc ici k = 100).

On a codé ainsi une image d'une façon qui est compatible avec les entrées d'un réseau de neurones ; ce codage va permettre d'introduire toutes les informations expliquant au réseau de neurones comment l'intensité, à la résolution donnée, varie en fonction des axes x et y. Ce codage est adapté au réseau de neurones de manière à ce qu'il puisse effectuer une classification des pixels d'intérêt PI dans une des 10 classes C1 à C10 de façon efficace. Ces informations sont suffisantes pour construire une image de probabilité pour chaque pixel d'intérêt PI d'appartenir à une des 10 classes définies dans le tableau I.

**Ic) TROISIEME ETAPE :** Utilisation d'un premier réseau de neurones.

Lorsque le vecteur de k caractéristiques a été défini pour chacun des 4096 pixels d'intérêt PI de l'image 64 x 64, I(PI), ce vecteur est présenté à l'entrée d'un premier réseau de neurones référencé NN1, ayant un même nombre k d'entrées référencées $E_1^1$ à $E_k^1$, une seule couche cachée et un nombre m de sorties égal à celui des classes anatomiques, soit ici 10 sorties référencées C1 à C10.

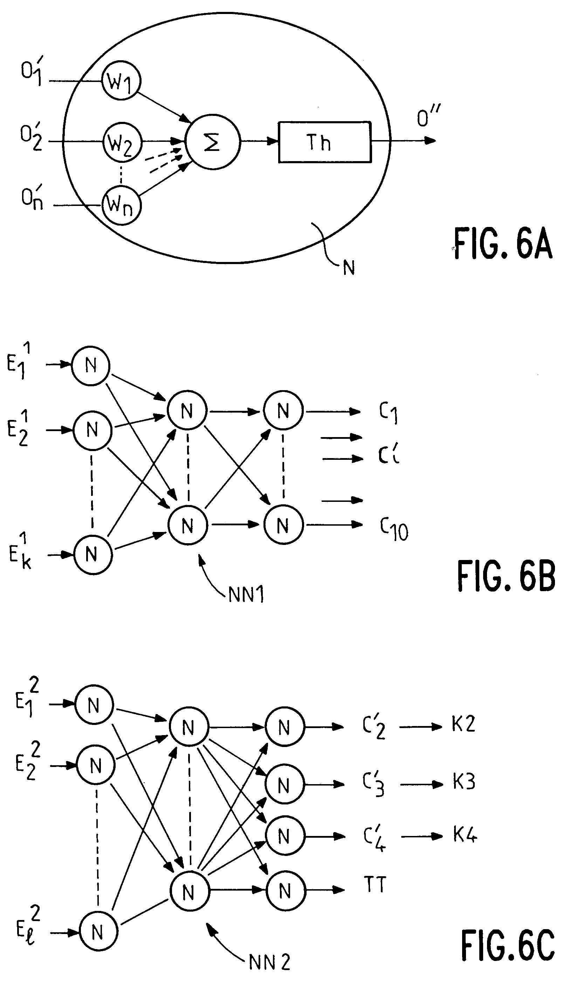

En référence avec la FIG.6A, un réseau de neurones est composé de plusieurs éléments de calcul appelés neurones N arrangés en couches. Chaque élément ou neurone N fournit une sortie 0'' et peut recevoir une ou plusieurs entrées $0'_1$, $0'_2$, etc. La sortie est activée lorsque la somme $\Sigma$ des entrées pondérées par des poids W1, W2, etc... dépasse une certaine fonction de seuil Th.

En référence avec la FIG.6B, les différents neurones N et leurs interconnexions pondérées forment un réseau. Les neurones N dans la couche d'entrée reçoivent leurs entrées du monde extérieur ; et les neurones de la couche de sortie fournissent leurs sorties au monde extérieur. Les couches présentes entre la couche d'entrée et la couche de sortie sont appelées couches cachées. Les fonctions de seuil Th peuvent avoir diverses formes et sont appelées fonctions d'activation.

Un réseau de neurones est soumis à un apprentissage. Pour cet apprentissage, une base de données est constituée, pour laquelle on a déterminé expérimentalement quelles sorties doivent être obtenues lorsque certaines données sont présentées aux entrées. Durant l'apprentissage, les poids du réseau de neurones sont déterminés par des essais répétés utilisant la base de données, par l'introduction des entrées connues et la recherche des sorties voulues. Lorsque les résultats sont jugés satisfaisants, c'est-à-dire lorsque le réseau de neurones sait donner les sorties valables correspondant à certaines entrées, alors les poids sont fixés. Désormais le réseau de neurones travaille en classification.

Selon l'invention, le (ou les) réseau(x) de neurones utilisés NN1 et éventuellement NN2 ne comporte(nt) qu'une seule couche cachée et un petit nombre de sorties.

D'une manière générale, le premier réseau de neurones NN1 est choisi tel qu'il ait autant d'entrées $E_1^1$ à $E_k^1$ que de caractéristiques $E_1$ à $E_k$ présentées. Par exemple :

- $E_1^1$ à $E_k^1$ = 256 entrées pour les k = 256 caractéristiques $E_1$ à $E_k$ présentées lorsque la méthode selon l'invention inclut une transformation log-polaire,
- $E_1^1$ à $E_k^1$ = 125 entrées pour les k = 125 caractéristiques $E_1$ à $E_k$ présentées lorsque la méthode inclut une batterie de 105 filtres formant des opérateurs différentiels auxquels s'ajoutent 20 caractéristiques particulières,
- $E_1^1$ à $E_k^1$ = 100 entrées pour les k = 100 caractéristiques $E_1$ à $E_k$ sélectionnées de manière préférentielle selon l'invention.

Ce premier réseau de neurones NN1 a ensuite 10 neurones dans la couche cachée, et 10 sorties qui correspondent aux 10 classes anatomiques C1 à C10 définies dans le Tableau I.

En sortie de ce premier réseau de neurone NN1, à la place de l'image sous-échantillonnée I(PI), 64 x 64, formée des pixels d'intérêt PI sélectionnés, on obtient 10 images dites d'activation I(Ci) qui représentent chacune le résultat de la fonction d'activation de la sortie correspondante du réseau de neurone (avec i = 1 à 10).

Chaque pixel d'intérêt PI est ainsi doté de 10 valeurs de probabilités $Q_1$, $Q_2$, $Q_3$,..., $Q_{10}$, chaque valeur $Q_1$ à $Q_{10}$, représentant la probabilité que ce pixel a de se trouver dans chaque classe Ci anatomique de C1 à C10.

Ainsi, il se trouve qu'un pixel d'intérêt PI peut avoir une forte valeur de probabilité relativement à plus d'une classe. Or ce pixel d'intérêt ne peut se trouver en fait que dans une seule classe anatomique Ci, c'est-à-dire dans une seule image d'activation I(Ci). Les autres valeurs fortes de probabilité qui lui ont été attribuées sont en réalité des fausses alarmes.

Ces fausses alarmes doivent être éliminées. A cet effet le procédé selon l'invention comporte une seconde phase.

**II/ DEUXIEME PHASE** : Elimination des fausses alarmes.

On rappelle que le but de l'invention est finalement de déterminer les coordonnées de seulement 3 pixels clés K2, K3, K4, et d'éliminer tous les autres pixels référencés alors TT.

Ces trois pixels seront sélectionnés respectivement dans chacune des images d'activation correspondant à chacune des classes anatomiques :

I(C2) $\rightarrow$ Apex K2
I(C3) $\rightarrow$ Extrémité postérieure de la valve K3
I(C4) $\rightarrow$ Extrémité antérieure de la valve K4

Dans chacune de ces images d'activation I(C2), I(C3), I(C4) se trouvent des fausses alarmes formées par des pixels, parmi les pixels d'intérêt, qui se trouvent avoir aussi une valeur de probabilité élevée par rapport à cette même classe.

L'utilité d'avoir formé dans la première phase, au moyen du premier réseau de neurones NN1, non pas seulement 3 images d'activation, mais 10 images d'activation correspondant aux diverses régions anatomiques du ventricule gauche plus la région des pixels extérieurs, est que l'on va pouvoir maintenant utiliser ces informations pour imposer des conditions de cohérence aux informations concernant ces trois images vis-à-vis des informations des autres images d'activation, qui sont toutes des images de probabilité.

En effet, par exemple, une forte probabilité pour qu'un pixel d'intérêt PI appartiennent à la classe de l'apex doit être cohérente avec une forte probabilité pour que la région anatomique située au nord-ouest soit une région interne et avec une forte probalité pour que la région anatomique située au sud soit du fond constitué de pixels externes.

Chacun des pixels des deux autres classes clés doit également être associé à des conditions de probabilité concernant leur voisinage dans certaine direction vis-à-vis des 10 régions anatomiques. Ces conditions de voisinage permettront ainsi d'éliminer les fausses alarmes.

Par exemple, 1 pixel de la classe valve antérieure, qui n'aurait pas la classe aorte à sa gauche et une région interne au sud est une fausse alarme par rapport à cette classe valve antérieure.

**IIa) PREMIERE ETAPE** : Génération d'un vecteur de $\ell$ caractéristiques E'$_1$ à E'$_\ell$, pour chaque pixel d'intérêt PI et dans chaque image d'activation I(Ci).

Dans cette étape, on génère 6 caractéristiques par pixel d'intérêt PI de chacune des 10 images d'activation I(Ci), soit en tout un nombre $\ell$ = 60 caractéristiques référencées E'$_1$ à E'$_\ell$ pour une localisation en x,y d'un pixel d'intérêt PI dans l'image 512 x 512.

Ces 6 caractéristiques par images I(Ci) sont générées par des opérateurs différentiels réalisés par autant de filtres de SOBEL, successivement à ordre 0, à ordre 1 et à ordre 2.

Dans cette étape on essaye donc de découvrir le comportement de l'image d'activation, à une échelle d'une dizaine de pixels autour du pixel courant. Ainsi on considère le pixel courant et un voisinage passe-bas d'environ 10 pixels.

On passe donc sur chaque image d'activation une batterie de six filtres qui caractérisent en chaque pixel d'intérêt la probabilité pour que ce pixel appartienne à une classe en fonction de sa position vis-à-vis de son voisinage. Typiquement, on obtient ainsi une forte compression d'informations puisque, dans l'exemple choisi en chaque pixel, on va seulement déterminer six données ou valeurs. Ces six valeurs sont obtenues par les dérivées calculées par les filtres qui sont :

- à l'ordre 0 : la valeur passe-bas lissée de la probabilité (1 valeur),
- à l'ordre 1 : le gradient dans le sens des x et le gradient dans le sens des y (2 valeurs),
- à l'ordre 2 : la dérivée seconde dans le sens des x et la dérivée seconde dans le sens des y et la dérivée mixte en x et en y (3 valeurs).

Ces caractéristiques décrivent par exemple que la probabilité pour qu'un pixel appartienne à une classe donnée est grande lorsque le gradient varie de telle manière dans le sens des x de telle manière dans le sens des y, lorsque la valeur moyenne a un certain niveau dans un voisinage donné, etc. Ces six valeurs caractérise la façon dont la probabilité varie dans l'espace.

**IIb) SECONDE ETAPE :** Utilisation d'un deuxième réseau de neurones.

En référence avec la FIG.6C, un deuxième réseau de neurones référencé NN2 reçoit en entrée ces six valeurs pour chaque pixel d'intérêt de chacune des dix classes de probabilité. Ce second réseau de neurones reçoit donc en tout en entrée 60 valeurs par pixel d'intérêt constituant un vecteur d'entrée de $\ell$ = 60 caractéristiques. De cette façon, ce réseau a l'information de la façon dont les différentes probabilités varient dans l'espace avoisinant le pixel d'intérêt courant. Ce deuxième réseau de neurones NN2 est dans ces conditions capable de rejeter les fausses-alarmes. En effet, quand les intensités des pixels varient de façon cohérente avec une classe déterminée, c'est cette classe qui est encouragée. Quand l'intensité des pixels varie au contraire de façon incohérente avec une classe déterminée, cette classe est découragée.

Ce deuxième réseau de neurones comporte donc en sortie un nombre q = 4 classes :

- la classe apex = C'2
- la classe valve antérieure = C'3
- la classe valve postérieure = C'4
- la classe de tous les autres pixels = TT.

Ensuite parmi tous les pixels sélectionnés en sortie du deuxième réseau de neurones NN2, dans une des trois classes d'intérêt C'2, C'3, C'4 ou classes des trois pixels clés, il convient encore de prendre une décision pour sélectionner définitivement un seul pixel par classe.

Une première solution consiste à sélectionner le pixel qui montre la valeur de probabilité la plus élevée dans sa classe.

Une autre solution consiste à construire une fonction de coût utilisant à la fois les informations relatives aux valeurs de probabilités et des informations supplémentaires de cohérence. Parmi ces informations supplémentaires, on peut prendre en compte que les trois pixels clés recherchés K2, K3, K4 forment un triangle isocèle ayant pour base la distance des deux pixels d'extrémité de valve K3, K4 et ayant pour sommet l'apex K2.

### III/ VARIANTE DE LA DEUXIEME PHASE

Dans une variante de l'invention la dernière solution mettant en oeuvre une fonction de coût peut être appliquée dès la sortie du premier réseau de neurones NN1.

A cet effet, les informations de chacune des trois images, de probabilité I(C2), I(C3), I(C4) correspondant aux pixels clés K2, K3, K4 sont combinées avec les informations de l'image des courbes équiniveaux et de celles des gradients.

**IIIa) PREMIERE ETAPE :** Réduction du nombre des pixels dans les classes des pixels clés.

Seules les trois classes de probabilité I(C2), I(C3), I(C4) sont considérées.

Il est à nouveau important de réduire le nombre des pixels à traiter, par rapport au nombre de pixels contenu dans chacune de ces images de probabilité.

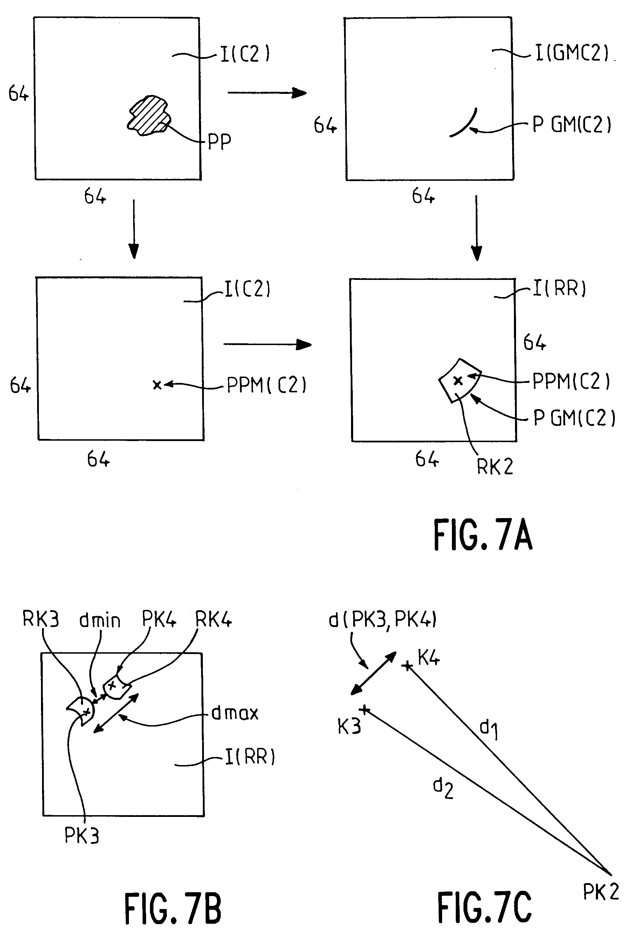

A cet effet, en référence avec la FIG.7A, on construit à partir de chaque image de probabilité, une nouvelle image, respectivement I(GMC2), I(GMC3), I(GMC4) des gradients avec élimination des gradients non maximaux. Cette construction est effectuée par la procédure déjà décrite précédemment dans la première phase du procédé selon l'invention et qui était alors appliquée à l'image d'origine. Chacune de ces images nouvellement construite ne contient que des tronçons de courbes formées de pixels, PGM(C2), PGM(C3), PGM(C4), ayant des gradient maximaux, donc situés sur des contours.

Le problème est qu'on a trouvé que, dans la plupart des cas, les vrais pixels clés ne sont :

- ni exactement sur ces contours PGM,
- ni exactement le pixel PPM ayant la valeur de probabilité la plus haute dans la classe considérée.

Dans ces conditions, dans chaque classe C2, C3, C4 :

- à partir de la position du pixel PPM(Ci) (avec i = 2, 3 ou 4) ayant la probabilité maximale dans la classe donnée, on sélectionne :
- le segment de contour le plus proche de ce pixel PPM(Ci). Par exemple on sélectionne le segment de contour situé à pas plus de 2 à 5 pixels de ce pixel de probabilité maximale PPM(Ci),
- puis on sélectionne tous les pixels d'une petite région RKi, ayant le PPM(Ci) pour centre et pour un de ses bords le segment de contour connu grâce à la nouvelle image des gradients maximaux I(GMCi) (avec i = 2, 3 ou 4).

On a alors délimité des petites régions RK2, RK3, RK4 dans chaque image I(C2), I(C3), I(C4), centrées autour d'un pixel de probabilité maximale, de surface partiellement délimitée par des pixels de gradients maximaux. Ces petites régions contiennent peu de pixels. Ces pixels sont notés PK2, PK3, PK4 respectivement, et l'expérience a montré que les pixels clés véritables se trouvent réellement dans ces régions référencées dans une nouvelle image I(RR).

IIIb) SECONDE ETAPE : Mise en oeuvre d'une fonction de coût.

Dans cette étape, il reste à déterminer réellement les trois pixels clés K2, K3, K4.

A cet effet, on peut déterminer directement les 3 pixels clés à la fois. Ou bien on peut déterminer d'abord les deux pixels d'extrémité de valve K3, K4, et, se fondant sur ces deux pixels déterminés de façon robuste, déterminer ensuite la position de l'apex K2.

Si la seconde solution est choisie, à titre d'exemple, on calcule donc d'abord les coordonnées des pixels d'extrémité de valve K3, K4.

En référence avec la FIG.7B, à cet effet, on évalue :

- la distance la plus petite dmin entre les pixels des deux régions RK3 et RK4 qui contiennent les pixels sélectionnés pour la recherche des extrémités de valve K3, K4,
- la distance la plus grande dmax entre les pixels de ces deux régions RK4, RK3,
- la distance entre les pixels candidats d(PK3, PK4) de ces deux régions.

Ensuite on calcule une fonction de coût en utilisant des tables de codage logarithmique (en anglais LUT.log] et on on cherche le maximum de cette fonction qui peut être écrite simplement :

$$\texttt{LUT.log[PK3]} + \texttt{LUT.log[PK4]} + \texttt{LUT.log}[\frac{\texttt{d}^2\texttt{(PK4,PK3)}}{\texttt{d}^2\texttt{max}-\texttt{d}^2\texttt{min}}]$$

En référence avec la FIG.7C, à la suite de cette recherche d'un maximum de fonction LUT.log, il reste à déterminer la localisation de l'apex. Ceci est fait en considérant que les deux pixels K3, K4 forment la base d'un triangle isocèle, dont l'apex K2 est le sommet.

La localisation de l'apex K2 est alors obtenue en calculant un simple rapport qui fournit l'incertitude sur l'isocélité obtenue avec un pixel candidat apex PK2, lorsque les pixels d'extrémité de valve sont fixes K3, K4.

Soit d1 la distance entre le pixel apex candidat et K3,
d2 la distance entre le pixel apex candidat et K4.

Le meilleur pixel apex candidat est celui pour lequel le rapport entre le minimum de d1, d2 et le maximum de d1, d2 (ou ces valeurs au carré) est le plus proche de 1 possible.

## DISPOSITIF

Un dispositif est proposé ci-après pour mettre en oeuvre le procédé décrit plus haut. Ce dispositif peut être appliqué à la mise en oeuvre de ce procédé dans l'étude d'images autres que cardiographiques.

Dans l'exposé ci-après, on décrit les éléments de ce dispositif dans l'application au traitement d'images cardiographiques à titre d'exemple non limitatif.

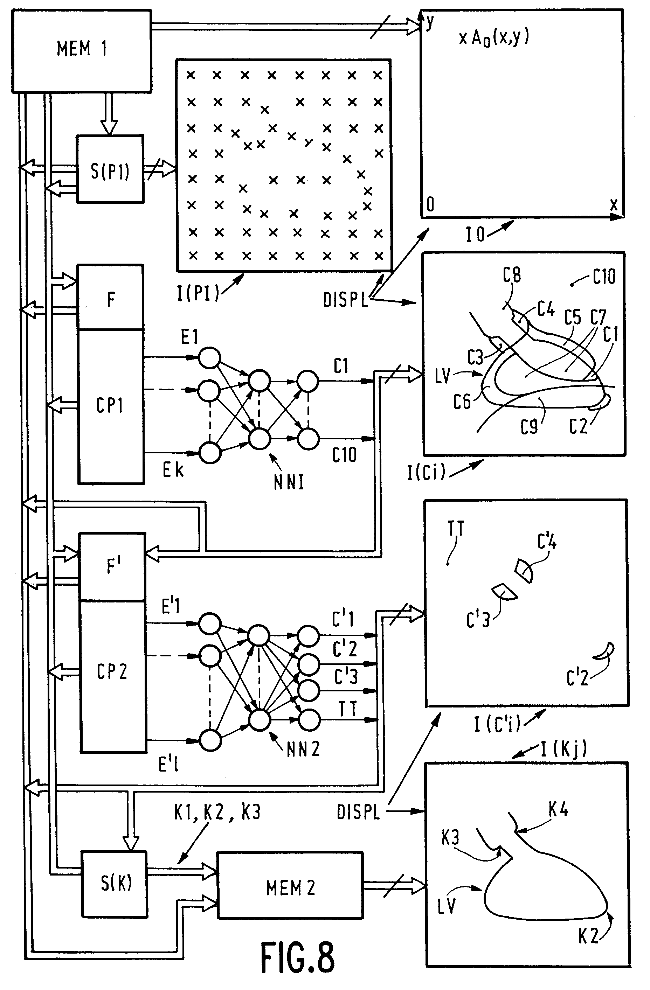

En référence avec la FIG.8, un dispositif de traitement d'images pour détecter automatiquement des pixels clés $K_2$, $K_3$, $K_4$ du contour d'un objet tel que le ventricule gauche LV dans une image comprend essentiellement :

- une première mémoire MEM1 qui mémorise, dans une image initiale $I_0$ numérisée, contenant cet objet, telle que décrite plus haut en référence avec la FIG.1B, les valeurs d'intensité de chaque pixel courant $A_0$ repéré par ses coordonnées x, y ; cette première mémoire MEM1 mémorise en outre des données relatives à des classes C1 à C10 formées de régions anatomiques de l'objet LV, décrites précédemment en référence avec la FIG.1A ; parmi ces classes, trois classes référencées classes correspondantes $C_2$, $C_3$, $C_4$, entourent respectivement les pixels à détecter $K_2$, $K_3$, $K_4$ ;
- des moyens de sélection S(PI) qui sélectionnent dans l'image initiale $I_0$, des pixels référencés pixels d'intérêt PI situés sur le contour du ventricule gauche LV dans l'image $I_0$, et à l'intérieur et à l'extérieur de cet objet ;

- des premiers moyens de calcul CP1 qui génèrent un premier vecteur de caractéristiques $E_1$ à $E_k$ pour chaque pixel d'intérêt PI ; ces caractéristiques comprennent des informations locales et des informations globales prélevées autour du pixel d'intérêt PI considéré ;
- un premier réseau de neurones NN1 tel que décrit en référence avec la FIG.6B qui reçoit à ses entrées un vecteur de caractéristiques pour chaque pixel d'intérêt considéré et qui détermine la probabilité qu'a chaque pixel d'intérêt PI d'appartenir aux différentes classes $C_1$ à $C_{10}$ ; les sorties de ce premier réseau de neurones permettent de construire 10 images de probabilité $I(C_1)$ à $I(C_{10})$ contenant les pixels PI sélectionnés comme ayant la plus forte probabilité d'appartenir à chaque classe : sur la FIG.8 on a représenté pour la simplicité du dessin, une image rassemblant toutes les classes $C_1$ à $C_{10}$.

Tel que représenté sur la FIG.8, ce dispositif comprend en outre :

- des seconds moyens de calcul CP2 qui génèrent un second vecteur de caractéristiques $E'_1$ à $E'_\ell$ relatif aux pixels d'intérêt PI ;
- un second réseau de neurones NN2, tel que décrit en référence avec la FIG.6C, qui reçoit à ses entrées le second vecteur de caractéristiques $E'_1$ à $E'_\ell$ et qui détermine la probabilité qu'ont les pixels d'intérêt PI d'appartenir aux 3 classes $C_2$, $C_3$, $C_4$, correspondant respectivement aux pixels clés $K_2$, $K_3$, $K_4$, ou bien au reste de l'image TT ;
- des moyens de sélection S(K) qui sélectionnent, comme pixels clés $K_2$, $K_3$, $K_4$, les pixels des classes $C_2$, $C_3$, $C_4$ qui ont montré la plus forte probabilité d'appartenance à ces classes ; ces moyens de sélection S(K) prennent aussi en compte pour cette sélection des hypothèses géométriques comme il a été décrit plus haut en référence avec les FIG.7.

En référence avec la FIG.8 ce dispositif peut en outre comprendre une seconde mémoire MEM2 pour mémoriser les données des différentes images formées par les différents moyens du dispositif, ainsi que des moyens d'affichage DISPL ayant accès à MEM1 ou à MEM2 ; pour des raisons de simplicité du dessin, on n'a ps représenté tous les accès entre les différents moyens, les mémoires MEM1, MEM2 et DISPL ; ces connexions entre ces éléments sont simples et ne représentent qu'un travail de routine à la portée de l'homme du métier.

Tel que décrit plus haut en référence avec les FIG.3A à 3E, les moyens de sélection S(PI) des pixels d'intérêt PI incluent : des filtres gradients appliqués à l'image initiale $I_0$ pour sélectionner des pixels ayant un gradient d'intensité maximale P(GM) situés sur le contour de l'objet LV et éliminer les autres pixels ; les moyens de sélection S(PI) incluent aussi des moyens de calcul pour échantillonner l'image initiale $I_0$ à une fréquence inférieure en conservant en priorité les pixels P(GM) ayant un gradient d'intensité maximal.

En référence avec la FIG.8, ce dispositif comprend des moyens de calcul F pour fournir des données d'image locales et globales, autour de chaque pixel d'intérêt PI.

Dans une forme de réalisation, ces moyens de calcul F incluent :

- des filtres de type multirésolution à noyaux de fonctions gaussiennes, appliqués à l'image initiale $I_0$ et des moyens de calcul pour sous-échantillonner les images filtrées pour former une pyramide d'images gaussiennes $I_1$ à $I_7$, comme décrit précédemment en référence avec les FIG.4A à 4C,
- des moyens de calcul d'une fonction de transformation log-polaire appliquée aux pixels d'intérêt PI selon une abaque formée de secteurs circulaires, comme décrit précédemment en référence avec les FIG.5A et 5B.

Dans cette forme de réalisation les premiers moyens de calcul CP1 effectuent l'estimation de chaque caractéristiques $E_1$ à $E_k$ dudit premier vecteur de caractéristiques, comme une moyenne des intensités des pixels dans chaque secteur circulaire de l'abaque relative à la transformation log-polaire, par une interpolation de l'intensité de quatre pixels voisins sélectionnés dans une des images de la pyramide d'images gaussiennes, qui coïncident avec les quatre pixels de coins délimitant ledit secteur circulaire concerné, en tenant compte de la distance de ces pixels due à la fréquence d'échantillonnage de l'image gaussienne utilisée.

Dans une autre forme de réalisation les moyens de calcul F incluent :

- des moyens de calcul de l'intensité de chaque pixel d'intérêt PI identifié dans chaque image $I_0$ à $I_7$ de la pyramide d'images gaussiennes,
- des filtres récursifs orientables autour de chaque pixel d'intérêt PI, pour calculer, dans chaque image $I_0$ à $I_7$ de la pyramide d'images gaussiennes un développement en série dont les termes sont constitués par les dérivées partielles d'un ordre 0 à un ordre n de la fonction de convolution de la fonction gaussienne relative à ladite image par l'intensité du pixel d'intérêt PI considéré.

Dans cette dernière forme de réalisation, les premiers moyens de calcul CP1 génèrent ledit premier vecteur de caractéristiques relatif à chaque pixel d'intérêt PI par l'estimation de chaque caractéristique $E_1$ à $E_k$ comme un des termes des développements en série calculés pour les images de la pyramide d'images gaussiennes.

En référence avec la FIG.8, ce dispositif comprend en outre :

- des seconds moyens de calcul CP2 pour générer un second vecteur de caractéristiques $E'_1$ à $E'_\ell$ relatif aux pixels d'intérêt ;
- un second réseau de neurones NN2 tel que décrit plus haut en référence avec la FIG.6E, pour recevoir à ses entrées le second vecteur de caractéristiques et pour effectuer une classification des pixels d'intérêt PI en classes correspondantes $C_2$, $C_3$, $C_4$ et une classe des pixels autres, et
- des moyens de sélection S(K) de chacun des pixels clés $K_2$, $K_3$, $K_4$ parmi les pixels d'intérêt PI de la classe correspondante $C_2$, $C_3$, $C_4$.

Ce dispositif comprend en outre des moyens de calcul F' pour fournir des données d'images locales autour de chaque pixel d'intérêt PI, prélevés dans des images référencées images de probabilité $I(C_1)$ à $I(C_{10})$ constituées des pixels d'intérêt dans lesdites classes $C_1$ à $C_{10}$ fournies par le premier réseau de neurones NN1, incluant :

- des moyens de calcul de l'intensité de chaque pixel identifié dans chaque image de probabilité,
- des filtres récursifs orientables autour de chaque pixel d'intérêt PI pour calculer dans chaque image de probabilité des dérivées partielles d'un ordre 0 à un ordre p, comme déjà décrit en référence avec la FIG.7A.

Ces filtres fournissent des données particulières concernant le voisinage de chaque pixel d'intérêt, et notamment la présence possible de certaines classes autour du pixel considéré.

Dans cette forme de réalisation les seconds moyens de calcul CP2 effectuent l'estimation de chaque caractéristique $E'_1$ à $E'_\ell$ du second vecteur de caractéristiques comme celles appliquées en chaque pixels d'intérêt qui codent les probabilités de présence de certaines desdites classes $C_1$ à $C_m$ autour des pixels d'intérêt PI,

- et les moyens de sélection S(K) des pixels clés $K_2$, $K_3$, $K_4$ retiennent les pixels qui remplissent une condition résidant dans la probabilité la plus élevée d'appartenir respectivement à la classe correspondante $C_1$, $C_2$, $C_3$, et éventuellement particulièrement comme décrit plus haut en référence avec les FIG.7B et 7C, ceux qui remplissent en outre une condition géométrique selon laquelle les extrémités de la valve aortique $K_3$, $K_4$ forment la base d'un triangle isocèle dont l'apex $K_2$ est le sommet.

## Revendications

1. Procédé de traitement d'images pour détecter automatiquement des points situés sur le contour d'un objet (LV), référencés pixels clés ($K_2$, $K_3$, $K_4$) dans une image référencée image initiale ($I_0$), ce procédé comprenant une première phase incluant des étapes de :

   mémorisation dans l'image initiale ($I_0$) en forme de matrice bidimensionnelle de pixels des valeurs d'intensité de chaque pixel ($A_0$) repéré par ses coordonnées (x,y)

   mémorisation dans l'image initiale ($I_0$) de données de régions de l'objet (LV) référencées classes ($C_1$ à $C_m$) incluant des classes référencées classes correspondantes ($C_2$, $C_3$, $C_4$) contenant respectivement les pixels clés ($K_2$, $K_3$, $K_4$) à détecter ;

   sélection de pixels de l'image initiale ($I_0$) référencés pixels d'intérêt (PI), sur le contour, à l'intérieur et à l'extérieur de l'objet (LV) ;

   génération d'un premier vecteur de caractéristiques ($E_1$ à $E_k$) pour chacun des pixels d'intérêt (PI) ;

   classification des pixels d'intérêt (PI) dans lesdites classes ($C_1$ à $C_m$) de l'objet (LV) à partir de leur vecteur de caractéristiques respectif ($E_1$ à $E_k$) ;

2. Procédé selon la revendication 1 comprenant, dans la première phase, dans l'étape de sélection des pixels d'intérêt (PI), des sous-étapes de :

   filtrage de l'image initiale ($I_0$) pour sélectionner des pixels ayant un gradient d'intensité maximale [P(GM)] situés sur le contour de l'objet (LV) ;

   échantillonnage de l'image initiale ($I_0$) à une fréquence inférieure en conservant en priorité les pixels [P(GM)] ayant un gradient d'intensité maximal.

3. Procédé selon la revendication 2 comprenant en outre, dans la première phase, des étapes de :

   filtrage multirésolution de l'image initiale ($I_0$), par des fonctions gaussiennes, et sous-échantillonnage des images filtrées pour former une pyramide d'images gaussiennes ($I_0$ à $I_7$) ;

génération dudit premier vecteur de caractéristiques relatif à chaque pixel d'intérêt (PI) à partir des données d'image de cette pyramide d'images gaussiennes.

4. Procédé selon la revendication 3, comprenant des étapes de :

transformation log-polaire appliquée aux pixels d'intérêt (PI) selon une abaque formée de secteurs circulaires ;

génération dudit premier vecteur de caractéristiques par l'estimation de chaque caractéristique ($E_1$ à $E_k$) comme une moyenne des intensités des pixels dans chaque secteur circulaire de l'abaque relative à la transformation log-polaire, calculée par une interpolation de l'intensité de quatre pixels voisins sélectionnés dans une des images de la pyramide d'images gaussiennes, qui coïncident avec les quatre pixels de coins délimitant ledit secteur circulaire concerné, en tenant compte de la distance de ces pixels due à la fréquence d'échantillonnage de l'image gaussienne utilisée.

5. Procédé selon la revendication 3, comprenant des étapes de :

calcul de l'intensité de chaque pixel d'intérêt (PI) identifié dans chaque image ($I_0$ à $I7$) de la pyramide d'images gaussiennes,

filtrages récursifs orientables dans chaque image ($I_0$ à $I7$) de la pyramide d'images gaussiennes autour de chaque pixel d'intérêt (PI), pour calculer un développement en série limité dont les termes sont constitués par les dérivées partielles, d'un ordre 0 à un ordre n, de la fonction de convolution de la fonction gaussienne relative à ladite image, par l'intensité du pixel d'intérêt (PI) considéré ;

génération dudit premier vecteur de caractéristiques relatif à chaque pixel d'intérêt (PI) par l'estimation de chaque caractéristique ($E_1$ à $E_k$) comme un des termes des développements en série calculés pour les images de la pyramide d'images gaussiennes.

6. Procédé selon l'une des revendications 4 ou 5, comprenant une étape de :

génération dudit premier vecteur de caractéristiques, avec adjonction, aux caractéristiques déjà calculées, de caractéristiques particulières, incluant le module du gradient des pixels d'intérêt, la direction dans laquelle ce gradient est maximal, la courbure des lignes équiniveaux de gris.

7. Procédé de traitement d'images selon l'une des revendications 1 à 6 comprenant en outre une deuxième phase incluant une étape de :

sélection de chacun des pixels clés ($K_2$, $K_3$, $K_4$) parmi les pixels d'intérêt (PI) de la classe correspondante ($C_2$, $C_3$, $C_4$).

8. Procédé selon la revendication 7, comprenant dans la seconde phase des étapes de :

génération d'un second vecteur de caractéristiques ($E'_1$ à $E'_\ell$) relatif aux pixels d'intérêt, ces caractéristiques codant les probabilités de présence de certaines desdites classes ($C_1$ à $C_m$) autour des pixels d'intérêt (PI) ;

classification des pixels d'intérêt (PI) en classes correspondantes ($C_2$, $C_3$, $C_4$) et une classe des pixels autres.

9. Procédé selon la revendication 8 comprenant une étape de :

sélection des pixels clés ($K_2$, $K_3$, $K_4$) comme ceux qui remplissent une première condition résidant dans la probabilité la plus élevée d'appartenir respectivement à la classe correspondante ($C_1$, $C_2$, $C_3$).

10. Procédé selon la revendication 9, dans lequel l'image à traiter est une image cardiographique où l'objet est le ventricule gauche (LU), où les pixels clés à détecter sont l'apex ($K_2$) et les deux extrémités de valve aortique ($K_3$, $K_4$), ce procédé comprenant dans la seconde phase une étape de :

sélection des pixels clés ($K_2$, $K_3$, $K_4$) comme ceux qui remplissent en outre une seconde condition géométrique selon laquelle les extrémités de la valve aortique ($K_3$, $K_4$) forment la base d'un triangle isocèle dont l'apex ($K_2$) est le sommet.

11. Dispositif de traitement d'images pour détecter automatiquement des points situés sur le contour d'un objet (LV), référencés pixels clés ($K_2$, $K_3$, $K_4$) dans une image référencée image initiale ($I_0$), ce dispositif comprenant :

des premiers moyens de stockage (MEM1) pour mémoriser, dans l'image initiale ($I_0$) en forme de matrice bidimensionnelle de pixel, les valeurs d'intensité de chaque pixel ($A_0$) repéré par ses coordonnées (x,y), et des données de régions de l'objet (LV), référencées classes ($C_1$ à $C_m$), incluant des classes référencées classes correspondantes ($C_2$, $C_3$, $C_4$) contenant respectivement les pixels clés ($K_2$, $K_3$, $K_4$) à détecter:

des moyens de sélection [S(PI)] de pixels de l'image initiale ($I_0$), référencés pixels d'intérêt (PI), sur le contour, à l'intérieur et à l'extérieur de l'objet (LV) ;

des premiers moyens de calcul (CP1), pour générer un premier vecteur de caractéristiques ($E_1$ à $E_k$) pour

chacun des pixels d'intérêt (PI) ;

un premier réseau de neurones (NN1) pour recevoir à ses entrées le premier vecteur de caractéristiques et pour effectuer une classification des pixels d'intérêt (PI) dans lesdites classes ($C_1$ à $C_M$) de l'objet (LV) à partir de leur vecteur de caractéristiques ($E_1$ à $E_k$) respectif.

12. Dispositif selon la revendication 11, dans lequel les moyens de sélection [S(PI)] des pixels d'intérêt (PI) incluent :

des filtres gradients appliqués à l'image initiale ($I_0$) pour sélectionner des pixels ayant un gradient d'intensité maximale [P(GM)] situés sur le contour de l'objet (LV) et éliminer les autres pixels ;

des moyens de calcul pour échantillonner l'image initiale ($I_0$) à une fréquence inférieure en conservant en priorité les pixels [P(GM)] ayant un gradient d'intensité maximal.

13. Dispositif selon la revendication 12 comprenant en outre :

des moyens (F) pour fournir des données d'image locales et globales prélevées dans l'image initiale ($I_0$) autour de chaque pixel d'intérêt (PI) incluant des filtres de type multirésolution à noyaux de fonctions gaussiennes, appliqués à l'image initiale ($I_0$) et des moyens de calcul pour sous-échantillonner les images filtrées pour former une pyramide d'images gaussiennes ($I_1$ à $I_7$) ;

dispositif dans lequel :

les premiers moyens de calcul (CP1) génèrent ledit premier vecteur de caractéristiques relatif à chaque pixel d'intérêt (PI) à partir des données d'image de cette pyramide d'images gaussiennes.

14. Dispositif selon la revendication 13, dans lequel :

les moyens (F) pour fournir des données d'image locales et globales incluent des moyens de calcul d'une fonction de transformation log-polaire appliquée aux pixels d'intérêt (PI) selon une abaque formée de secteurs circulaires ;

et les premiers moyens de calcul (CP1) effectuent l'estimation de chaque caractéristiques ($E_1$ à $E_k$) dudit premier vecteur de caractéristiques, comme une moyenne des intensités des pixels dans chaque secteur circulaire de l'abaque relative à la transformation log-polaire, par une interpolation de l'intensité de quatre pixels voisins sélectionnés dans une des images de la pyramide d'images gaussiennes, qui coincident avec les quatre pixels de coins délimitant ledit secteur circulaire concerné, en tenant compte de la distance de ces pixels due à la fréquence d'échantillonnage de l'image gaussienne utilisée.

15. Dispositif selon la revendication 13, dans lequel :

les moyens de calcul de l'intensité de chaque pixel d'intérêt (PI) identifié dans chaque image ($I_0$ à I7) de la pyramide d'images gaussiennes,

et des filtres récursifs orientables autour de chaque pixel d'intérêt (PI), pour calculer, dans chaque image ($I_0$ à I7) de la pyramide d'images gaussiennes un développement en série dont les termes sont constitués par les dérivées partielles d'un ordre 0 à un ordre n de la fonction de convolution de la fonction gaussienne relative à ladite image par l'intensité du pixel d'intérêt (PI) considéré,

et les premiers moyens de calcul (CP1) génèrent ledit premier vecteur de caractéristiques relatif à chaque pixel d'intérêt (PI) par l'estimation de chaque caractéristique ($E_1$ à $E_k$) comme un des termes des développements en série calculés pour les images de la pyramide d'images gaussiennes.

16. Dispositif selon l'une des revendications 14 ou 15, dans lequel :

les premiers moyens de calcul (CP1) pour générer ledit vecteur de caractéristiques comprennent des moyens pour ajouter aux caractéristiques déjà calculées, des caractéristiques particulières, incluant le module du gradient des pixels d'intérêt, la direction dans laquelle ce gradient est maximal, la courbure des lignes équiniveaux de gris.

17. Dispositif de traitement d'images selon l'une des revendications 11 à 16 comprenant en outre :

des moyens de sélection [S(K)] de chacun des pixels clés ($K_2$, $K_3$, $K_4$) parmi les pixels d'intérêt (PI) de la classe correspondante ($C_2$, $C_3$, $C_4$).

18. Dispositif selon la revendication 17, comprenant :

des seconds moyens de calcul (CP2) pour générer un second vecteur de caractéristiques ($E'_1$ à $E'_\ell$) relatif aux pixels d'intérêt ;

un second réseau de neurones (NN2) pour recevoir à ses entrées le second vecteur de caractéristiques et pour effectuer une classification des pixels d'intérêt (PI) en classes correspondantes ($C_2$, $C_3$, $C_4$) et une classe des pixels autres.

**19.** Dispositif selon la revendication 18, comprenant en outre :

des moyens (F') pour fournir des données d'image locales autour de chaque pixel d'intérêt (PI) prélevés dans des images référencées images de probabilité [I($C_1$) à I($C_{10}$)] constituées des pixels d'intérêt dans lesdites classes ($C_1$ à $C_{10}$) fournies par le premier réseau de neurones (NN1),

des moyens de calcul de l'intensité de chaque pixel identifié dans chaque image de probabilité,

des filtres récursifs orientables autour de chaque pixel d'intérêt (PI) pour calculer dans chaque image de probabilité des dérivées partielles d'un ordre 0 à un ordre p,

dispositif dans lequel :

les seconds moyens de calcul (CP2) effectuent l'estimation de chaque caractéristique ($E'_1$ à $E'_\ell$) du second vecteur de caractéristiques comme celles appliquées en chaque pixels d'intérêt qui codent les probabilités de présence de certaines desdites classes ($C_1$ à $C_m$) autour des pixels d'intérêt (PI),

et les moyens de sélection [S(K)] des pixels clés ($K_2$, $K_3$, $K_4$) retiennent les pixels qui remplissent une condition résidant dans la probabilité la plus élevée d'appartenir respectivement à la classe correspondante ($C_1$, $C_2$, $C_3$).

**20.** Dispositif selon la revendication 19, pour traiter une image cardiographique où l'objet est le ventricule gauche (LV), où les pixels clés à détecter sont l'apex ($K_2$) et les deux extrémités de valve aortique ($K_3$, $K_4$), dispositif dans lequel :

les moyens de sélection [S(k)] des pixels clés ($K_2$, $K_3$, $K_4$) retiennent ceux qui remplissent en outre une condition géométrique selon laquelle les extrémités de la valve aortique ($K_3$, $K_4$) forment la base d'un triangle isocèle dont l'apex ($K_2$) est le sommet.

**21.** Dispositif selon l'une des revendications 11 à 20 comprenant des seconds moyens de stockage (MEM2) et des moyens d'affichage (DISPL) pour respectivement mémoriser et afficher des données formées par des intensités de pixels repérés par leurs coordonnées (x,y) dans des images en forme de matrice bidimensionnelle de pixels.

FIG. 1

FIG. 2

FIG. 3A

FIG. 3B

FIG.3C

FIG. 3D

FIG.3E

$I_0 (512 \times 512)$

$F1 [\tilde{6}_1]$

$I_1 (256 \times 256)$

$F2 [\tilde{6}_2]$

$I_2 (256 \times 256)$

$F3 [\tilde{6}_3]$

$I_3 (128 \times 128)$

$F4 [\tilde{6}_4]$

$I_4 (128 \times 128)$

$F5 [\tilde{6}_5]$

$I_5 (64 \times 64)$

$F6 [\tilde{6}_6]$

$I_6 (64 \times 64)$

$F7 [\tilde{6}_7]$

$I_7 (64 \times 64)$

FIG. 4A

F1

$2\tilde{6}$

$A_0$

$\tilde{6}_1 = 2$

x (pixels)

FIG. 4B

F4

$2\tilde{6}$

$A_0$

$\tilde{6}_4 = 8$

x (pixels)

FIG. 4C

FIG. 5A

FIG.5B

FIG. 6A

FIG. 6B

FIG.6C

FIG. 7A

FIG. 7B

FIG. 7C

FIG.8

Office européen
des brevets

**RAPPORT DE RECHERCHE EUROPEENNE**

Numero de la demande

EP 95 20 1835

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,Y | PROCEEDINGS OF COMPUTER IN CARDIOLOGY 1992 (CAT. NO.92CH3259-9), DURHAM, NC, USA, 11-14 OCT. 1992, ISBN 0-8186-3552-5, 1992, LOS ALAMITOS, CA, USA, IEEE COMPUT. SOC. PRESS, USA, PAGE(S) 359 - 362, VAN DER ZWET P N J ET AL 'Left ventricular contour detection: a fully automated approach' * le document en entier * | 1-21 | G06T5/00 |
| Y | IEEE TRANSACTIONS ON BIOMEDICAL ENGINEERING, SEPT. 1974, USA, VOL. BME-21, NR. 5, PAGE(S) 345 - 349, ISSN 0018-9294, GRIFFITH R L ET AL 'An algorithm for locating the aortic valve and the apex in left-ventricular angiocardiograms' * page 346, colonne de gauche, ligne 2 - page 348, colonne de gauche, ligne 1; figures 3,5 * | 1-21 | |
| A | AUTOMEDICA, JUNE 1988, UK, VOL. 10, NR. 1, PAGE(S) 17 - 32, ISSN 0095-0963, LILLY P ET AL 'Digital methods for automatic left ventricular contour definition' * page 21, alinéa 2 * | 2,12 | **DOMAINES TECHNIQUES RECHERCHES (Int.Cl.6)** G06F |
| A | US-A-4 101 961 (FLETCHER JAMES C ADMINISTRATOR ET AL) 18 Juillet 1978 | | |
| A | W.A. LEVENBACH 'Automatische bepaling van een linkerventrikel - model in agiografische beelden' Juin 1988 , TECH. UNIVERSITEIT DELFT , ROTTERDAM * page 83, alinéa 5; figure 6.1 * | 1,11 | |

Le présent rapport a été établi pour toutes les revendications

| Lieu de la recherche | Date d'achèvement de la recherche | Examinateur |
|---|---|---|
| LA HAYE | 8 Septembre 1995 | Pierfederici, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P04C02)